# EUROPEAN PATENT APPLICATION

(11) **EP 3 246 239 A1**
(43) Date of publication of application: **22.11.2017**
(21) Application number: 17386009.9
(22) Date of filing: 03.03.2017
(51) Int. Cl.: B62M 1/24, F02B 75/32, F01B 9/00, F01B 9/08

(54) **CONVERTER OF DYNAMIC TO ROTATION MOTION BY MEANS OF A SIDE LINK**

(30) Priority: 03.03.2016 GR 20160100077
(71) Applicant: Mastrokalos, Antonios, 84003 Sifnos (GR)
(72) Inventor: Mastrokalos, Antonios, 84003 Sifnos (GR)

(57) **Abstract**

The invention relates to a reciprocating engine which uses a force at the end of the side link (3) to convert it to rotational motion. This is possible, by means of a side link (3), which grasps the pin (1) of the crankshaft (9) with a motion ratchet (2) and by means of a gear planet (4), engaged with a ring (5) fixed on the engine shell (14), when the crankshaft rotates to the right, the planet (4) inverses, continuously varying by the cam (6) the angles of the dynamic effect parallelogram, enclosed between the sides of the side link (3) connecting arms (7) and cams (6, 10) respectively, to positions converting the perpendicularly applied force at the end of the side link (3) to continuous rotational motion.

## Description

The present invention relates to a reciprocal engine, which for its operation requires only dynamic energy, which is converted to kinetic rotational one.

The various types of engines which have been invented so far, such as heat engines and fuel cell engines converting chemical energy to kinetic energy, cause large thermal unexploited losses, contributing to the greenhouse effect. At the same time, the exploitation of the nuclear reactors, with the known impacts and occasional accidents, makes evident the accompanying risks, and therefore these are not an ideal solution for widespread use. Furthermore, the exploitation combinations of the renewable energy sources do not provide solutions satisfying the need for energy independence, since they cannot provide depots.

Based on the first law of thermodynamics, the conservation of energy, an engine is provided herein, which operates independently, and fully ecologically, converting only dynamic energy to rotation energy and motion, obviating all the above-mentioned undesired impacts.

The said engine may serve multiple needs of a wide range of power demands, ranging from milliwatts to thousands of kilowatts. For example, the electricity-producing set of engine-generator, having the size of a battery of a portable -but not only- electronic microdevice, replaces that completely, freeing the device from charger cables and batteries. No weather limitation as regards height elevation, or depth is imposed. There is no limitation as regards the orientation of the mounting base. It operates under vacuum, immersed in sea, or even in outer space. It can respond to areas containing toxic or flammable volatile gases, while it is free from fuel supply grids, there is no danger of lubrication filter clogging, since its oils are not exposed to polluting agents. Thus, it is suitable for remote control, without human supervision nearby.

The realization of the said aim and operation of this engine is based on a long lever am, designated herein below as side link, which is mounted at the middle of the pin by means of a motion ratchet, so that there is an element of catching or retaining the crankshaft from its pin and of causing a large torque thereon. The lever arm is called side link, since the applied force to be transformed is not applied along the longitudinal direction of its body, but on the side thereof with small deviations from the vertical, passing through its application point, due the verticality of the force applied at its other end constantly at the maximum possible distance. In order to keep the presence of the torque on the pin, and thus on the crankshaft, during its rotational motion, without a need for the end of the side link where force is applied to describe a repeating arcuate oscillation, so that the fixation point of the motion ratchet with the pin is changed, the body of the side link must maintain a specific orientation. This is possible by the cooperation of a double system of connecting arms and joints, which by eccentric rings guided by gear planets and rings, undertake the continuous change of the angles of a dynamic parallelogram, which is complemented with the side link, so that the end of the side link on which the transformable force is applied, executes a simple reciprocal motion, on the path located on the straight line passing through the center of the crankshaft, without the need of arcuate oscillation at this end, while its other end rotates continuously with the pin-crankshaft.

Thus if the size of the vertically applied transformable force, at the end of the said system is such that it causes a torque couple, which exceeds the various resistances, frictions and load of the engine, or generally of the resisting force, the result will be a loss of the rest state and an angular displacement of the crankshaft, if it is continued without interruption, then the result will be a smooth rotational motion of the crankshaft.

It is apparent that the longer the length of the side link, the smaller the demands for imposing transformable force, at their end to exceed the various resistances. While the construction of the engine with more pins on its crankshaft can serve higher power needs.

Compared Dynamically to the thermal reciprocating engines, which provide useful energy per rotation and depending on the thermodynamic type of their operation, depending on whether they are two-stroke or four-stroke by minimal degrees during combustion or explosion-expansion phase and only, while they have energy losses during the required phases of compression and air scanning-exhaust gas extraction, with a very small variable lever arm length plus the refrigeration losses, the disclosed engines are outputting continuously with the same intensity and over 360 degrees, with a constant and large lever arm length and with a force perpendicular at its end, with minimal angular deviations from the vertical, while the produced and discharged amounts of heat during their operation are minimal. Additionally, if the manufacturing materials are synthetic, which are non-expandable and self-lubricating, then the produced amounts of heat are further decreased.

These and other features, as well as the pure ecological advantages of the operation of the engine, as well as its fully autonomy from every energy need, are shown in the following detailed description. The invention will be fully understood with reference to the accompanying figures, which depict an exemplary embodiment.

Thus in order to provide an engine relating to the conversion of dynamic energy to kinetic rotational energy, the disclosure will be described with reference to the respective figures.

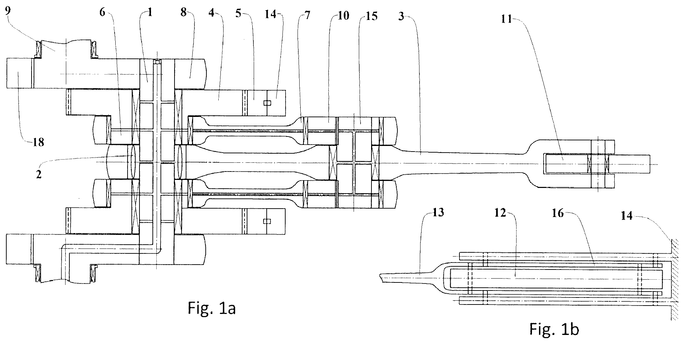

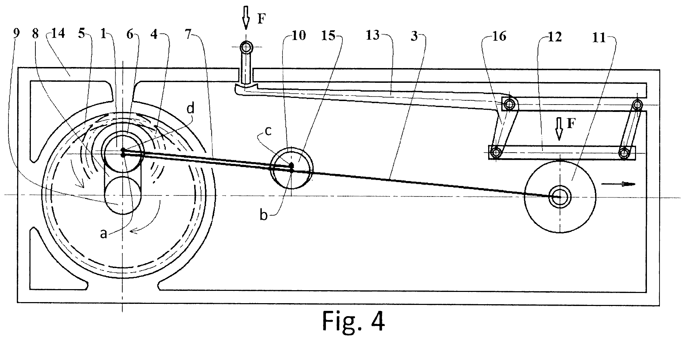

Figure 1 a shows the basic parts of the engine in top view, where the crankshaft is at a position of 90 degrees, all its essential parts are given, the essential parts including the rings, coupled with the planets of the pin, which undertake the inversion of their eccentric ring extensions, in relation to the rotation direction of the pin or crankshaft. The planets with their eccentric ring extensions are supported and rotated with bearings on the pins, which pins are stably fixed on the cheeks of the crankshaft. Thus, for each clockwise displacement of the crankshaft, since the relation of the planets constantly coupled with the rings is 2/1, they are displaced inversely or counterclockwise by the same angular amount, entraining the eccentric ring extensions on which the connecting arms are jointed, as well as of the respective eccentric rings of the dynamic effect control camshaft, which are present at the other end of the dynamic lever arm parallelogram, with the same amount of eccentricity, which constitute two of the four arms or sides of this parallelogram, as shown in figure 4, where in the extension of the side link a transformable force is applied, maintaining the smooth rotational operation of the crankshaft.

Figure 1b shows in top view the way of supporting the effect control parallelogram, of the transformable force at the end of the side link, which is slightly further from the dynamic lever arm parallelogram, being at a continuous contact by means of a beam and roller.

Figure 2 shows in side view, the side link with the motion ratchet from its one side, with which it grasps the pin of the crankshaft, while at the other side it ties with the other pin of the dynamic effect control camshaft, at the end of which it has a fixation nest of the effect roller.

Figure 3 shows in side view one of the connecting arms, which connect from the one side the eccentric ring extensions of the pin of the crankshaft, which belong to the system of the dynamic lever arm parallelogram, with the respective ones at the other end of the dynamic effect control camshaft, so that the proper orientation of the side link is maintained, in order that the presence on the crank shaft, of the torque couple, is not interrupted, when at its end a transformable force is applied.

Figure 4 shows the whole engine, being at an operation initiation position or phase, of 0 degrees. The produced rotating stresses and the initiation of the rotation of the engine are shown, if a transformable force is applied by the beam at the end of the side link.

Figure 5, 6 and 7 show the totality of the elements of the engine displaced to 90, 180 and 270 degrees respectively, again the causes and the rotating stresses on the crankshaft still act positively on the crankshaft, maintaining the smooth rotational motion, in the same initial direction.

With reference to the accompanying figures, a preferred embodiment of the invention is given showing its usefulness and way of operation.

Figure 1a shows a general top view of the engine, and in particular all its dynamic essential parts, being at a crankshaft position of 90 degrees. The crankshaft (9) with its cheeks (8), which have a pin (1) stably fixed thereon. The side link (3) grasps the pin (1) at is central area, by means of a motion ratchet (2), which entrains this clockwise, when at its other end and on the effect roller (11) the force which is transformable to rotational motion is applied, as better shown in side view in the accompanying figure 4-7. On both sides of the motion ratchet (2) with which the side link (3) grasps the pin (1), eccentric ring extensions (6) are present, which constitute an axial extension of the body of the planets (4), which are permanently coupled with the rings (5) fixed on the shell or body of the engine (14) and with a motion transmission ratio to those 2/1. It should be noted that for the prevention of axial thrust stresses, the teeth of the gear planets and rings are oblique and of opposite tilt to the opposite couples. During the clockwise motion of the crankshaft (9) and of its pin (1), the planets (4) being free in rotation, are inversed at each angular displacement of the crankshaft (9) and the pin (1) respectively by the same amount. In this way, as shown in detail in figure 4-7, the ring extensions (6) on the pin (1) of the crankshaft (9) change angle, forcing the respective ones of the eccentric rings (10) of the dynamic effect control camshaft, which are located at the other end of the dynamic parallelogram and of the pin of the dynamic effect control camshaft (15), by the same eccentricity amount, which constitute the two of the four arms or sides of the dynamic parallelogram, to follow those in the continuous angular variation, i.e. counterclockwise by the same angular size, entraining the connecting arms (7), and the part of the side link (3), which is enclosed between the pin (1) and the pin of the dynamic effect control camshaft (15), as better shown in the following figure 4-7, so that they maintain constant the orientation of the end of the side link (3) which has the roller (11) on which the transformable force is applied, not being displaced by an arc, which has as radius the length thereof. This end of the side link (3) with the roller (11) respectively, is in permanent contact with the beam (12) and arm system (16), wherein by an enhancing effect arm (13) the transformable force F is permanently applied under control. Number (18) shows the counter weights of the crankshaft (9), for its precise balancing, while it also drives an oil pump, for the proper lubrication of the movable elements, not shown in the figure.

Fig. 1b shows also in top view, a way of supporting the effect control parallelogram, of the transformable force at the end of the side link (3), supported on the shell or body of the engine (14), being in continuous contact with the side link (3) and with its roller (11), as shown in figure 4-7. The assemblage of the effect control parallelogram, with the joints and the arms (16) the enhancing effect arm (13), as well as its contact and effect beam (12) with the roller (11) of the side link (3) respectively.

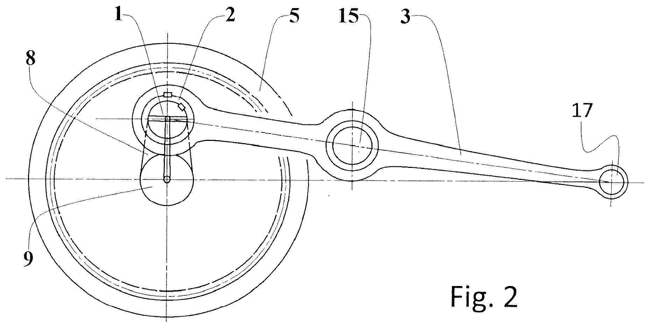

Fig. 2 shows in side view, the body of the side link (3), wherein at its side to the crankshaft (9), the way by which it is fixed by the motion ratchet (2) with the pin (1) of the crankshaft is shown, making it bound thereto. In some intermediate part thereof, the circular nest is shown, where this ties with the pin of the dynamic effect control camshaft (15), by means of which and its cams (10) as shown in the accompanying figures 4-7, they form the continuously variable -during engine operation- dynamic lever arm parallelogram (a-b-c-d). In its right end, the nest (17) is shown, where the effect roller (11) is fixed.

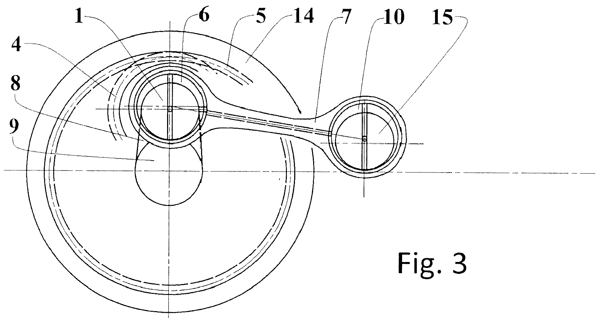

Fig. 3 shows in side view one of the two connecting arms (7), which connect from the one side the eccentric ring extensions (6) of the pin of the crankshaft (9) respectively, which belong to the system of the dynamic lever arm parallelogram, with the respective ones at the other end of the dynamic effect control camshaft (10) and the dynamic effect control camshaft pin (15), so that the proper orientation of the side link (3) is maintained, the presence of the torque couple on the crankshaft (9) is not interrupted, when on the roller of its other end (11) a force convertible to rotational-kinetic motion is applied.

Fig. 4 shows the engine, at an operation initiation position or phase, that of 0 degrees. It should be noted that for better understanding and to distinguish the various positions of the elements constituting the system of the lever arms of the dynamic parallelogram, it is shown in a simple scheme. The basic feature of the operation of the engine, in the manner disclosed, is the following: a dynamic lever arm parallelogram, which is enclosed between its ends or corners, a-b-c-d. Wherein at the center (a), the pin (1) of the crank shaft (9) is jointed with the body of the side link (3). At (b), the intermediate part of the side link (9) is jointed with the center of the pin of the dynamic effect control camshaft (15). The element (c) constitute the center where at this side the cam of the control camshaft (10) ties with the connecting arms (7). Finally, at (d), the connecting arms (7) are jointed with the eccentric extensions (6) of the planets. At the specific point, these four corners are at a position forming an oblique parallelogram. It is apparent that when, on the beam (12) of the effect control parallelogram, of the transformable force at the end of the side link (3), which is permanently adjacent to its effect roller (11), a force (F) is applied, then the other end of the side link (3), which grasps the pin (1) of the crank shaft (9), with the motion ratchet (2), and which force increases due to the enhancing effect force arm (13), if the size of the produced rotating stresses exceeds the total resistance or load of the crankshaft, then the crankshaft (9) will start to rotate to the right. At the same time, the planet (4) with its eccentric ring extension (6) at permanent coupling with the ring (5) starts to rotate inversely or counterclockwise. Simultaneously at the opposite end, of the dynamic lever arm parallelogram, where the system of the dynamic effect control camshaft with the cams (10) and the pin of the same degree of eccentricity respectively is located, interconnected by the side link (3) and the connecting arms (7), the same angular inversion thereof is caused, while the whole dynamic lever arm parallelogram (a-b-c-d) and the end of the side link with the roller (11) starts to move to the right, being permanently adjacent to the effect beam (12). The rotation of the crankshaft (9) to the right, and the displacement of the dynamic lever arm parallelogram with the side link (3) and all the accessories, will be continued, until it covers a distance equal to the radius of the pin (1), of the crankshaft (9), so that it reaches 90 degrees. At this position, all the lever arms and the corners of these joints (a, b, c, d) will coincide on the linear part, which passes through the center of the crankshaft (9) and the mounting end of the effect roller (11).

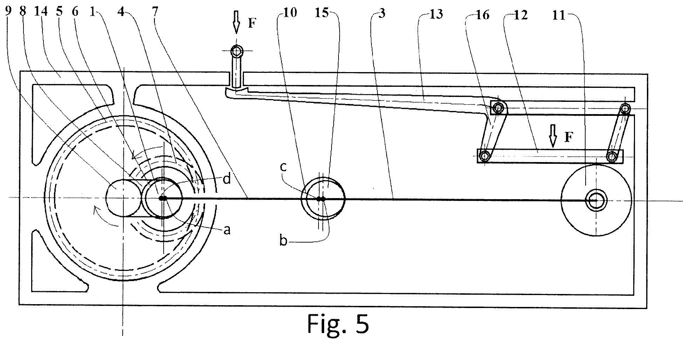

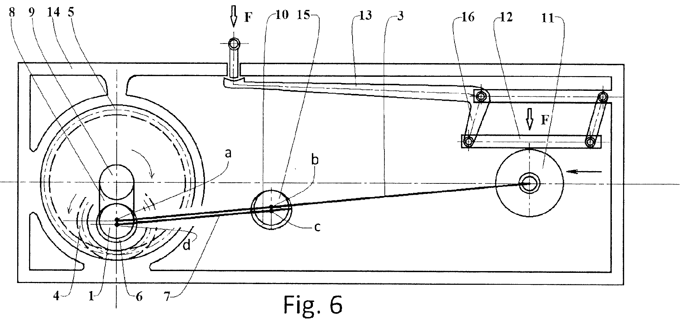

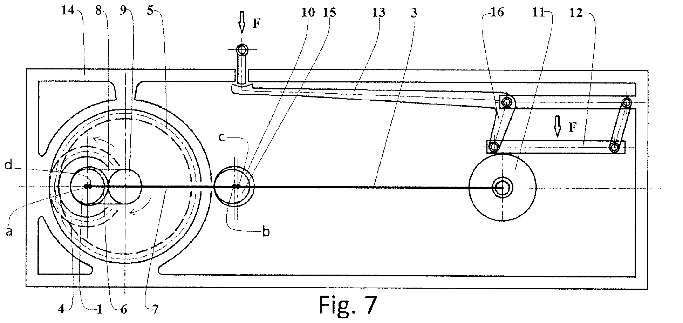

In figure 5, the above procedure and motion will start after 90 degrees, to inverse the motion of the side link (3) and the connecting arms (7) to the left, while the crankshaft (9) with its pin (1) will continue to rotate always to the right, with the planets (4) always rotating to the left until they reach 180 degrees. The roller (11) with all the accessories has terminated its clockwise travel. From that point and beyond, as shown in the exemplary arcs, the motions of the elements constituting the crankshaft (9) with the planets (4) - rings (5) and the dynamic lever arm parallelogram are again varied, as well as the path of the end of the side link with the roller (11), as shown in Fig. 6, so that a crankshaft is at 180 degrees, where the ends of corners of the joints of the dynamic lever arm parallelogram (a-b-c-d) have received an inversed position or a position symmetrical to that of 0 degrees. While then, when the crankshaft (9) is at 270 degrees, Fig. 7, the corners will be again aligned, and the inversion still continues, until the cycle of 360 degrees closes, and a repetition begins.

No particular mention is given for the ways and classes of the effectors, by which the application of the transformable force may be caused, maintained and controlled, since this constitutes an element of final application choice, from the commercially available products. The application of transformable force may be manual or foot-driven, in traffic means applications.

It should be noted that the description of the invention was given with reference to exemplary non-limiting embodiments. Any change or modification regarding shape, size, dimensions, manufacturing and assemblying materials and components used, fields of applications, as long as not constituting a new, and inventive step and not contributing to the state of the art, are considered encompassed in the scope of the present invention.

## Claims

1. A converter of dynamic to rotational motion by a side link, consisting of a crankshaft (9) with a crankshaft pin (1), on which a side link (3) is tied by means of a motion ratchet (2), on which pin (1) the planets (4) are fixed being in permanent coupling with rings (5), wherein the planets (4) on their shafts have eccentric ring extensions (6) which during the clockwise motion of the crankshaft (9) and the pins (1) respectively, rotate counterclockwise, due to the coupling with the rings (5), while at a distance from the crankshaft (9), there is an control camshaft with cams (10) and a pin (15), wherein the pin (1) of the crankshaft and the pin (15) of the control camshaft with cams (10) are tied between them with the side link (3) and with connecting arms (7), constituting a dynamic lever arm parallelogram, so that when at the end of the side link (3) a transformable force is applied, since the crankshaft (9) and its pin (1), where the side link (3) by the motion ratchet (2) ties constantly thereto, allows only gradual variation of the retention angle, which is defined by the individual angular position of the planets (4) and its eccentric ring extensions (6).

2. A converter of dynamic to rotational motion by a side link, according to claim 1, **characterized in that** it has an enhancing arm (13) of large length, which is directly connected by arms and joints, which constitute a dynamic lever arm parallelogram with corners (a-b₋c-d), which with the continuous smooth variation of its angles, makes feasible the operation of the engine.
